# EUROPÄISCHE PATENTSCHRIFT

(11) **EP 1 517 763 B1**
(45) Veröffentlichungstag und Bekanntmachung des Hinweises auf die Patenterteilung: **14.11.2007**
(21) Anmeldenummer: 03762413.7
(22) Anmeldetag: 21.06.2003
(51) Int. Cl.: B23D 53/04

(54) **METALLBANDSÄGE MIT AUFGEHÄNGTEM SÄGERAHMEN**
METAL-CUTTING BAND SAW COMPRISING A SUSPENDED SAW FRAME
SCIE A RUBAN A METAUX AVEC CADRE DE SCIE SUSPENDU

(30) Priorität: 03.07.2002 DE 10229999
(43) Veröffentlichungstag der Anmeldung: 30.03.2005
(60) Teilanmeldung: 06003663.9
(73) Patentinhaber: Diener, Mark, 72589 Westerheim (DE)
(72) Erfinder: Diener, Mark, 72589 Westerheim (DE)
(74) Vertreter: Rüger, Barthelt & Abel Patentanwälte
(86) Internationale Anmeldenummer: PCT/DE2003/002074
(87) Internationale Veröffentlichungsnummer: WO 2004/004957

(56) Entgegenhaltungen:
- EP-A- 0 491 120
- EP-A- 0 722 814
- US-A- 2 669 261
- US-A- 4 111 085
- US-A- 5 144 994

## Beschreibung

Aus der DE 40 40 470 A1 ist eine Metallbandsäge gemäß den Oberbegriffen von Anspruch 1 und 2 bekannt. An dem Maschinengestell befindet sich ein Spannstock, mit dem das zu bearbeitende Werkstück auf dem Maschinengestell festgelegt wird. Zu dem Spannstock gehört eine feststehende Spannbacke, die gleichzeitig eine Referenzfläche darstellt.

Der Sägerahmen, in dem das Sägeband gelagert ist, kann mit Hilfe eines Schwenklagers in unterschiedliche Gehrungsstellungen gebracht werden. Das hierzu erforderliche Schwenklager sitzt unterhalb der Werkstückebene und trägt nicht nur den Sägerahmen sondern gleichzeitig auch noch einen Werkstückauflagetisch, mit dem jener Teil des Werkstücks beim Sägen unterstützt werden soll, der der spangebenden Bearbeitung unterliegt.

Der Vorteil dieser Anordnung besteht darin, dass das Sägeband gegenüber dem Auflagetisch keine Schwenkbewegung in horizontaler Richtung vollführt und deswegen immer an derselben Stelle in den Auflagetisch eintaucht, unabhängig von der Gehrungseinstellung.

Diesen Vorteil stehen jedoch eine Reihe gewichtiger Nachteile gegenüber.

Das Schwenklager befindet sich einem Bereich, in dem Schmutz, Späne und Kühlmittel anfallen. Die Drehlagerung selbst ist für Wartungszwecke schlecht zugänglich. Beim Verstellen des Gehrungswinkels muss der Tisch unterhalb des Werkstücks mitgedreht werden. Die Auflagekräfte, mit denen das Werkstück auf den Auflagetisch drückt, sind stark variabel und hängen von der relativen Form des Werkstücks ab. Somit treten stark unterschiedliche Kräfte auf, wenn der Tisch gedreht werden muss. Der Antrieb zum Einstellen des Gehrungswinkels ist deswegen auf die maximal mögliche Kraft auszulegen.

Die hohe Auflagekraft macht außerdem eine exakte Gehrungseinstellung praktisch unmöglich. Aufgrund der Eigenelastizität der gesamten Anordnung tritt je nach Reibverhältnissen zwischen Auflagetischen und Werkstück eine unterschiedlich große Verspannung auf. Abhängig von der Verspannung unterscheidet sich die Ist-Gehrungsstellung von der Soll-Gehrungsstellung.

Eine etwas andere Geometrie für eine Sägemaschine ist aus der EP 0 722 814 A1 bekannt. Die Sägemaschine weist ein Portal auf, dessen Querbalken ein Drehlager enthält mit einer vertikalen Drehachse. An dem Drehlager ist ein Zwischenträger befestigt, an dem wiederum der Sägerahmen mit Hilfe von Parallelführungen auf und ab bewegbar ist. Durch die Auf- und Ab-Bewegung wird das in dem Sägerahmen geführte Sägeband in vertikaler Richtung auf das Werkstück zugestellt. Unterhalb des Werkstücks befindet sich eine Führungseinrichtung, die während des Sägevorgangs am Ort des Sägebands niedergedrückt gehalten wird. Auf diese Weise wird eine Beschädigung der Auflageeinrichtung durch das Sägeband ausgeschlossen.

Das Werkstück liegt bei der Sägebearbeitung lose auf dem Werktisch auf. Das Eigengewicht soll das Werkstück gegen die Wirkung der Schnittkräfte an Ort und Stelle halten.

Aufgabe der Erfindung ist es, eine Metallbandsäge zu schaffen, die diese Nachteile verhindert.

Diese Aufgabe wird erfindungsgemäß mit der Metallbandsäge mit den Merkmalen des Anspruches 1 oder 2 gelöst.

Die neue Metallbandsäge weist ein Maschinengestell auf, das eine Auflageeinrichtung für das Werkstück umfasst. Neben der Auflageeinrichtung steht ein Hauptträger, an dem ein Schwenklager angeordnet ist. Das Schwenklager befindet sich oberhalb der Auflageeinrichtung und somit auch oberhalb des zu bearbeitenden Werkstücks. An dem Schwenklager sitzt ein Zwischenträger, an dem wiederum der Sägerahmen beweglich angebracht ist.

Mit Hilfe des Schwenklagers und des Zwischenträgers wird die Gehrungseinstellung vorgenommen.

Da das Schwenklager oberhalb des Werkstückes angeordnet ist, erfordert ein Schwenken des Zwischenträgers keine nennenswerte Kraft. Während des Verstellung des Gehrungswinkels stehen keine Teile, die mit dem Schwenklager oder dem Zwischenrahmen verbunden sind in irgendeiner Weise mit dem Werkstück in Eingriff. Damit ist die Kraft zum Verstellen des Zwischenträgers nur von den Lagerkräfte abhängig, die extrem klein sind. Die Gehrungseinstellung wird folglich nicht durch irgendwelche Eigenelastizitäten des Systems beeinträchtigt.

Das oberhalb des Werkstücks angeordnete Schwenklager befindet es sich in einer Zone, in der weder Kühlmittel noch Späne auftreten. Die Abdichtung des Schwenklagers ist damit wesentlich unkomplizierter. Die geringere Verschmutzungsgefahr kommt obendrein der Lebensdauer und Präzision der Schwenklagerung erheblich entgegen.

Darüber hinaus ist die neue Anordnung in Materialflussrichtung sehr kompakt.

Die Auflageeinrichtung für das Werkstück besteht im Wesentlichen aus einer Tischplatte, die als Verschleißteil ausgeführt ist. Beim Sägen wird in die Tischplatte eingeschnitten. Die Tischplatte wird im Laufe der Zeit verbraucht, wenn mit ständig wechselnden Gehrungen gearbeitet wird, die nicht miteinander übereinstimmen. Da jedoch üblicherweise nur wenige Gehrungswinkel benötigt werden, enthält die Tischplatte nur wenige Sägeschnitte, so dass eine hohe Lebensdauer ohnehin zu erwarten ist.

Um bei Gehrungsschnitten das Werkstück präzise zu halten, ist der Auflageeinrichtung der Spannstock zugeordnet, der einen feststehenden und einen zustellbaren Backen aufweist, um das Werkstück zwischen den Backen einzuklemmen. Der feststehende Backen bildet dabei in der üblichen Weise eine Referenzebene, an der das Werkstück anliegt und gegenüber der auch der Gehrungswinkel gemessen wird. Zur Vereinfachung der Längenbestimmung des abzulängenden Werkstückes liegt die vertikale Schwenkachse in einer Ebene, die durch den festen Backen des Spannstocks definiert ist.

Bei der anderen Ausführungsform der erfindungsgemäßen Metallbandsäge sitzt das Drehlager nicht zwischen dem Haupt- und dem Hilfsträger, sondern es befindet sich zwischen dem Hilfsträger und dem Sägerahmen. Der Hilfsträger ist an dem Hauptträger vertikal verfahrbar um die für den Schnitt erforderliche Zustellbewegung auszuführen. Das Drehlager verbindet den Sägerahmen mit dem Hilfsträger und befindet sich somit auch oberhalb des Werkstücks in einen geschützten Bereich.

Je nach Ausführung des Hauptträgers können ohne weiteres Gehrungswinkel bis zu 30° erreicht werden, ohne dass die Maschine in Längsrichtung, d.h. in Richtung des Materialflusses nennenswert größer werden muss.

Bei Sägemaschinen nach dem Stand der Technik hingegen musste ein sektorförmiger Drehtisch verwendet werden, wobei der Sektorwinkel bei Doppelgehrungen dem Doppelten des möglichen Gehrungswinkels entspricht, so dass die Maschine allein aufgrund der Abmessungen des Auflagetisches beachtliche Werte annimmt.

Für den Hauptträger sind zwei Konfigurationen möglich. Der Hauptträger kann als Portal ausgeführt sein oder eine galgenartige Gestalt haben. Die portalförmige Ausführung zeichnet sich durch eine besondere Robustheit aus und eignet sich insoweit auch für Anwendungen mit extrem großer Schnittbreite. Dabei ist zweckmäßigerweise der Abstand zwischen den Pfeilern größer als die entsprechende Breite des Sägerahmens, so dass eine beliebige Gehrungseinstellung möglich ist.

Die galgenförmige Konfiguration hat hingegen den wesentlichen Vorteil, dass der Auflagetisch für das Werkstück von der Seite her zugänglich ist. Lange Werkstücke, die einem mittleren Bereich getrennt werden müssen, können von der Seite her in die Maschine eingegeben werden. Sie brauchen nicht aufgelegt und in Längsrichtung durch die Maschine geschoben werden.

Wenn bei der galgenförmigen Ausführungsform der auskragende Balken parallel zur Materialflussrichtung liegt, so dass der Pfeiler in Materialflussrichtung gegenüber der Schnittposition versetzt ist, sind ohne weiteres Gehrungsverstellungen in beiden Richtungen möglich, während andererseits der Pfeiler sehr dicht an die Bearbeitungsstelle herangerückt werden und mit einem kurz auskragenden Balken gearbeitet werden kann.

Die Pfeiler können mit dem Maschinengestell fest verbunden oder unabhängig von diesem auf einem Betonfundament befestigt sein.

Auch für den Zwischenträger, an dem der Sägerahmen befestigt ist, kommen mehrere Ausführungsformen in Betracht. So kann der Zwischenträger eine L-förmige Gestalt haben, wenn der Sägerahmen lediglich an einem Ende geführt wird, oder aber der Zwischenträger kann eine im Wesentlichen gabelförmige Gestalt haben, was von Vorteil ist, wenn der Sägerahmen längs einer linearen Achse auf das Werkstück zugestellt wird.

Um das Eingeben des Werkstücks in die Sägemaschine zu vereinfachen, umfasst die Auflageeinrichtung Rollen, deren Außenumfangsfläche eine Ebene berührt, in der auch die Tischfläche liegt.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: die erfindungsgemäße Metallbandsäge mit einem portalförmigen Hauptträger, gesehen in Richtung parallel zu der Materialflussrichtung,
- Fig. 2: die Metallbandsäge nach Figur 1, in einer draufsicht, wobei die Gehrungseinstellungen gestrichelt dargestellt sind,
- Fig. 3: eine erfindungsgemäße Metallbandsäge mit einem galgenförmigen Hauptträger, gesehen in Richtung parallel zu der Materialflussrichtung,
- Fig. 4: die Metallbandsäge nach Figur 3, in einer Draufsicht, wobei die Gehrungseinstellungen gestrichelt dargestellt sind,
- Fig. 5: eine erfindungsgemäße Metallbandsäge mit Schwenklagerung des Sägerahmens, und
- Fig. 6: ein weiteres erfindungsgemäßes ausführungsbeispiel der Metallbandsäge mit einem portalförmigen Hauptträger, gesehen in Richtung parallel zu der Materialflussrichtung.

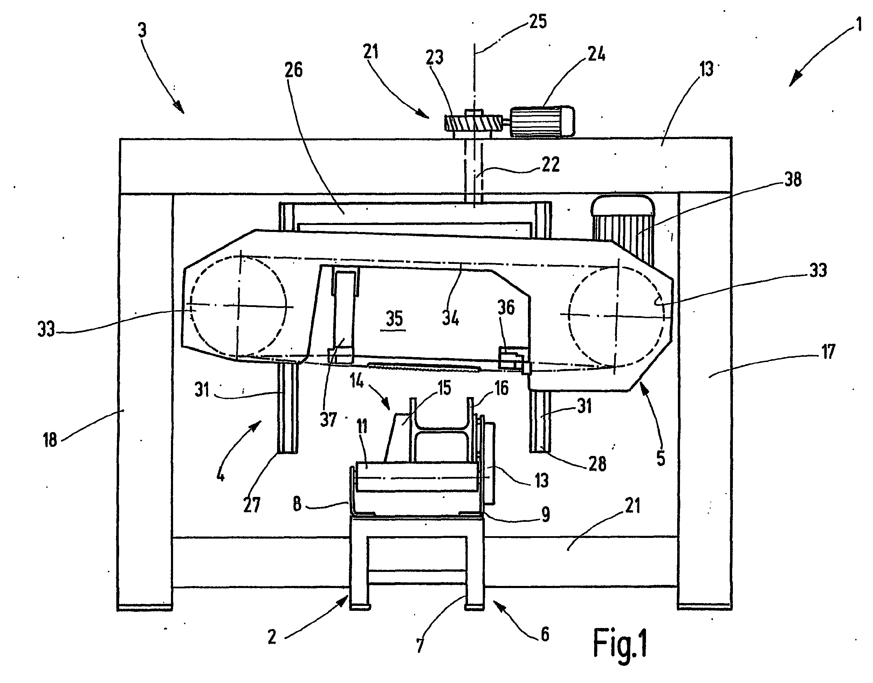

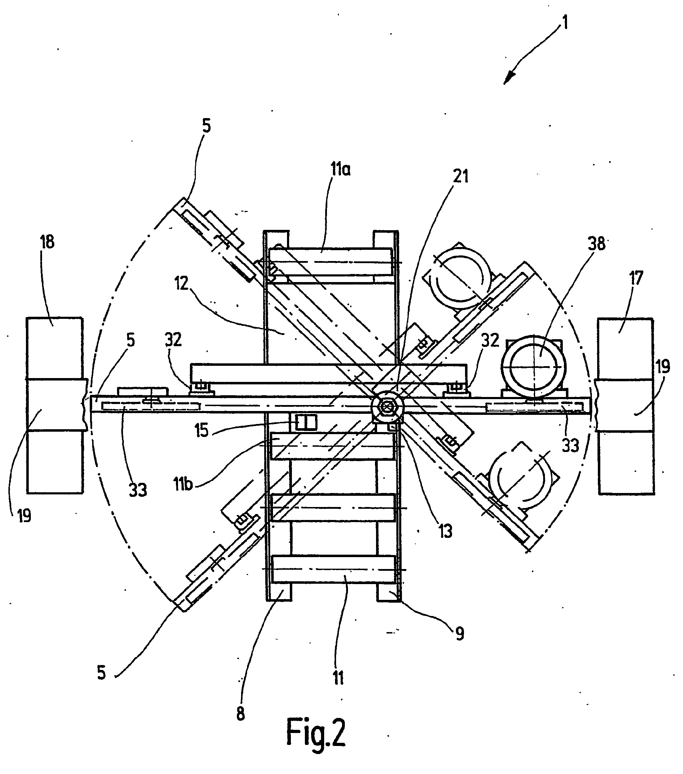

Die Figuren 1 und 2 zeigen eine erfindungsgemäße Metallbandsäge 1. Zu der Metallbandsäge 1 gehört ein Maschinengestell 2, über das sich ein portalförmiger Hauptträger 3 spannt, der auf dem Bodenfundament befestigt ist. An dem Hauptträger 3 ist ein Zwischenträger 4 schwenkbar gelagert, der seinerseits der Halterung eines Sägerahmens 5 dient.

Das Maschinengestell 2 setzt sich aus einem Untergestellt 6 mit Füßen 7 zusammen. Auf der Oberseite des Untergestells 6 sind zwei in Längsrichtung durchlaufende Winkelprofilschienen 8 und 9 befestigt. Zwischen den Winkelprofilschienen 8 und 9 sind achsparallel nebeneinander mehrere Rollen 11 gelagert, die als Werkstückauflage dienen. Die Rollen 11 sind frei drehbar und tangieren an ihrer Oberseite eine gedachte gemeinsame Ebene. Zwischen Rollen 11a und 11b liegt zwischen den Profilschienen 8 und 9 auf dem Untergestell 7 ein Art plattenförmiger Auflagetisch 12 auf. Der Auflagetisch 12 weist im Ursprungszustand eine ebene glatte Fläche auf, die sich auf der gleichen Höhe befindet, wie die Ebene, die durch die Rollen 11 definiert wird.

Neben der Profilschiene 9 ist ein ortsfester Backen 13 eines Spannstocks 14 befestigt, der eine ebene Anlageflächen trägt. Der Spannstock 14 weist ferner einen beweglichen Backen 15 auf, der über nicht weiter gezeigte Schienen rechtwinklig gegenüber dem feststehenden Backen 13 zustellbar ist. Zwischen den beiden Backen 13 und 15 kann ein in Figur 1 erkennbares Werkstück 16 in Gestalt eines I-Trägers 16 festgespannt werden. Der I-Träger 16 erstreckt sich senkrecht zu der Zeichenebene von Figur 1.

Der Hauptträger 3 setzt sich aus zwei Pfeilern 17 und 18 zusammen, die über ein Querjoch 19 miteinander verbunden sind. Die beiden Pfeiler 17 und 18 stehen beidseits des Maschinengestells 2 und sind gegebenenfalls über eine weitere Quertraverse 20 mit dem Maschinengestell 2 verbunden.

Das Querjoch 19 enthält ein Schwenklager 21, über das der Hauptträger 3 mit dem Zwischenträger 4 verbunden ist. Zu dem Schwenklager 21 gehört eine Lagerwelle 22, die durch eine entsprechende Bohrung in dem Querjoch 19 hindurchführt. Die Welle 22 trägt an ihrem oberen Ende drehfest ein Zahnrad 23, das mit einer Schnecke eines Antriebsmotors 24 kämmt. Die Welle 22 ist durch nicht weiter gezeigte, an sich bekannte Elemente, beispielsweise Rillenkugellage,r axial in dem Querjoch 19 gesichert. An ihrem unteren Ende ist die Welle 22 drehfest mit dem Zwischenträger 4 verbunden.

Die Welle 22 definiert eine vertikale Drehachse 25, die in einer Ebene liegt, in der auch die Werkstückanlagefläche des feststehenden Spannbackens 13 liegt.

Der Zwischenträger 4 ist gabelförmig und setzt sich aus einem Querbalken 26 sowie zwei parallel im Abstand zueinander verlaufenden Schenkel 27 und 28 zusammen.

Der Querbalken 26 verläuft horizontal und somit parallel zu dem Querjoch 19, während die beiden Schenkel 27 und 28 parallel zu der vertikalen Drehachse 25 ausgerichtet sind.

Jeder beiden Schenkel 27 und 28 trägt auf der dem Betrachter zugekehrten Seite jeweils eine Führungsschiene 31, die als Parallelführungsschiene mit komplementären Führungsschlitten an dem Sägerahmen 5 zusammenwirkt. Die komplementären Führungsschlitten sind in Figur 2 in der Draufsicht bei 32 veranschaulicht. Die Schlitten 32 und die Führungsschienen 31 können zusammen als Kugelführungen ausgebildet sein.

Der Sägerahmen 5 ist ein kastenförmiges Gehäuse, in dem zwei gestrichelt angegebene Umlenkrollen 33 achsparallel zueinander gelagert sind. Die Drehachsen liegen horizontal. Um die beiden Umlenkrollen 33 läuft ein Sägeband 34 um. Im unteren Bereich ist der Sägerahmen 5 mit einer Aussparung 35 versehen, in der das Sägeband 34 freigestellt ist. Im Bereich dieser Aussparung 35 sind zwei Sägebandführungen 36 und 37 vorhanden, mit deren Hilfe das Sägeband 34 in eine hochkant stehende Lage gedreht wird, so dass die Zähne des Sägebandes zwischen den beiden Sägebandführungen 36 und 37, wie gezeigt, nach unten ausgerichtet sind, während im übrigen Verlauf das Sägeband 34 flach liegt.

Mit Hilfe eines Antriebsmotors 38, der an der Rückseite des Sägerahmens 5 angeflanscht ist, wird die rechte Umlenkscheibe 33 wahlweise in Umdrehungen versetzt. Ein weiterer nicht gezeigter Antrieb dient dazu den Sägerahmen 5 beim Schnitt in Richtung auf das Werkstück 16 zuzustellen.

Wie die Figuren erkennen lassen, ist der Abstand zwischen den beiden Pfeilern 17 und 18 groß genug, damit der Sägerahmen 5 zusammen mit einem Antriebsmotor 38 ohne weiteres dazwischen Platz findet.

Die Verwendung der gezeigten Metallbandsäge 1 ist wie folgt:

Nach Öffnen des Spannstocks 14 wird über die Auflagerollen 11 ein Werkstück 16 zugeführt, das durch Schließen des Spannstocks 14 zwischen den beiden Spannbacken 13 und 15 festgeklemmt wird. Die Spannbacken 13 und 15 sind so positioniert bzw. verstellbar, dass in jeder beliebigen Gehrungseinstellung das Sägeband 34 nicht mit den Spannbacken 13 und 15 kollidieren kann.

Nachdem das Werkstück 16 festgeklemmt ist, wird durch Ingangsetzen des Antriebsmotors 24 der gewünschte Gehrungswinkel eingestellt. Hierzu wird die Welle 22 um die Vertikalachse 25 gedreht. Dabei wird der Zwischenträger 4 zusammen mit den Sägerahmen 5 entsprechend mit verschwenkt. Die Schwenkbewegung wird stillgesetzt, sobald der gewünschte Winkel zwischen dem Sägeband 34 und der Längsachse des Werkstückes 16 erreicht ist.

Aufgrund der speziellen Art der getrieblichen Verbindung zwischen der Welle 22 und dem Antriebsmotor 24 wird nach dem Stillsetzen des Antriebsmotors 24 jegliche Drehbewegung der Welle 22 blockiert, d.h. die einmal gewählte Gehrungseinstellung bleibt erhalten.

Nach Einstellen des Gehrungswinkels wird mit Hilfe eines nicht weiter gezeigten Antriebsmotors der Sägerahmen 5 längs der beiden Schenkel 27 und 28, die als Parallelführung wirken, vertikal nach unten geführt. Dabei taucht das zwischen den beiden Sägebandführungen 36 und 37 hochkant gestellte Sägeband 34 in das Werkstück 16 ein und schneidet es durch. Die Zustellbewegung wird beendet, nachdem das Werkstück 16 vollständig durchtrennt ist. Hierbei wird das Sägeband 34 auch ein Stück weit den Auflagetisch 12 mit einschneiden.

Nach dem Durchtrennen des Werkstückes 16 wird durch die Antriebseinrichtung der Sägerahmen 5 längs der beiden Schenkel 27 und 28 erneut nach oben gefahren, in die Stellung wie sie Figur 1 zeigt. In dieser Stellung besteht ein freier Durchlass zwischen dem Sägeband 34 und der Oberseite der Werkstückauflageeinrichtung 2.

Anstelle eines ortsfesten Spannstocks 14 kann das Maschinengestell 2 auch mit einem Spannstock versehen werden, wie er in der DE 40 40 470 erläutert ist. Bei dieser Anordnung kann der bewegliche Spannbacken 15 in Richtung parallel zu dem feststehenden Spannbacken 13 horizontal hin und her bewegt werden, um eine sicher Klemmung des Werkstücks 16 bei jeder Gehrungseinstellung zu erreichen.

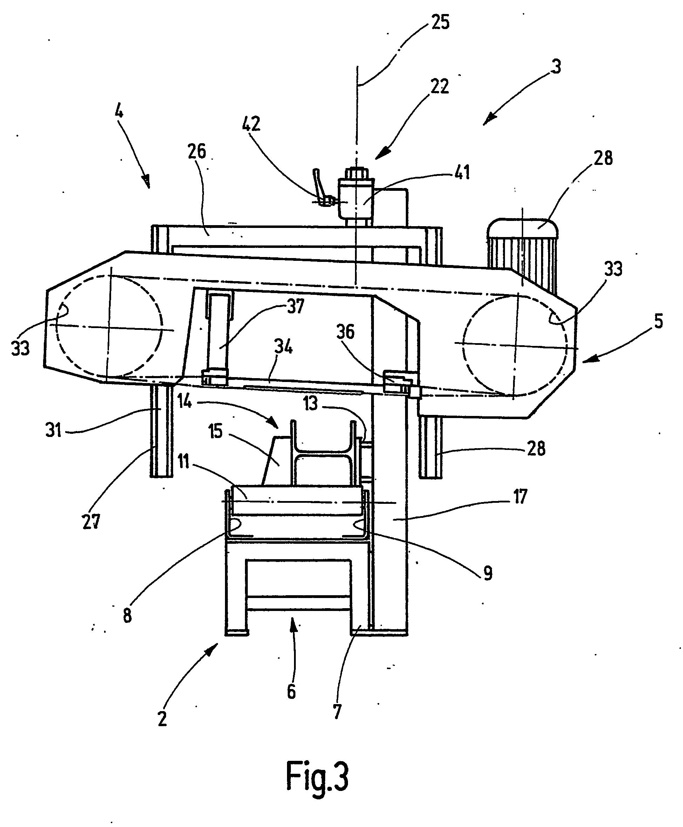

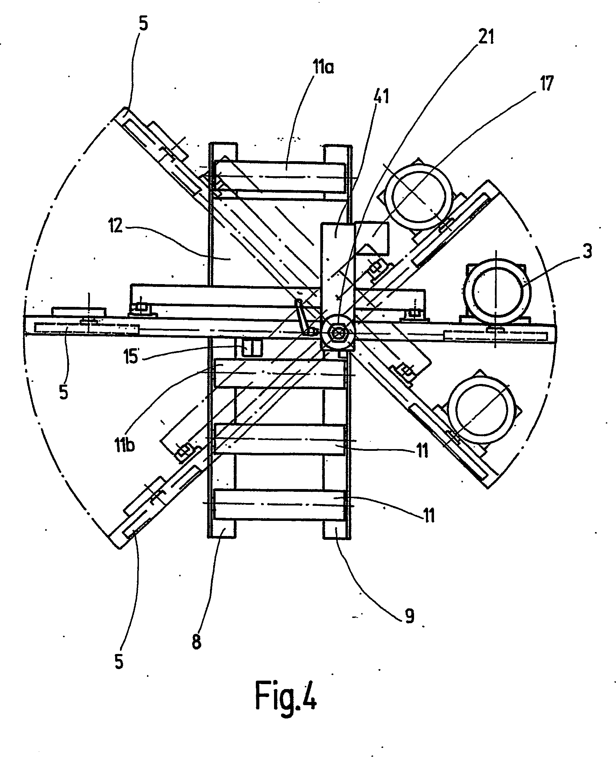

Die Figuren 3 und 4 zeigen ein anderes Ausführungsbeispiel der neuen Metallbandsäge 1. Der wesentliche Unterschied betrifft die Ausgestaltung des Hauptträgers 3.

Während bei dem Ausführungsbeispiel nach den Figuren 1 und 2 ein portalförmige Hauptträger 3 Verwendung findet, hat der Hauptträger 3 bei dem Ausführungsbeispiel nach den Figuren 3 und 4 eine etwa galgenförmige Gestalt. Er besteht aus einem einzigen Pfeiler 17 und einem Kragbalken 41, der ausgehend von dem Pfeiler 17 ein Stück weit in Richtung parallel zu der Längserstreckung des Maschinengestells 2 auskragt. An seinem freien Ende ist er mit dem bereits beschriebenen Schwenklager 21 versehen, das wiederum die Drehachse 25 definiert, die in der Ebene liegt, die die Spannfläche des feststehenden Backens 34 enthält. Der Pfeiler 17 ist unmittelbar am Maschinegestell 2 befestigt.

Bei der Ausführungsform nach den Figuren 3 und 4 ist für die Gehrungseinstellung keine Antriebseinrichtung vorgesehen. Statt dessen wird der Zwischenträger 4 von Hand verschwenkt. Nach Erreichen der gewünschten Gehrungseinstellung wird die Welle 22 durch einen Klemmhebel 42 festgeklemmt.

Die Verwendung eines oberhalb des Werkstückes befindlichen Schwenklager zur Gehrungseinstellung ist nicht auf parallelgeführte Sägerahmen beschränkt.

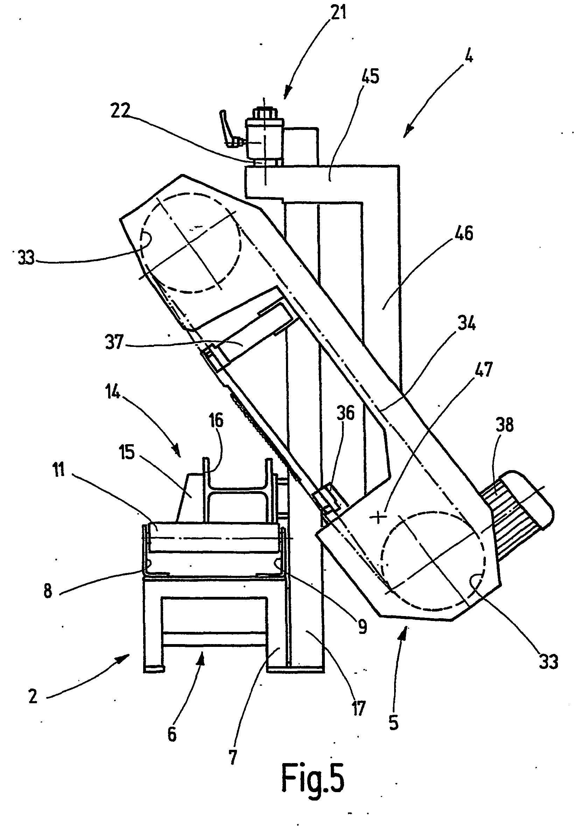

Figur 5 veranschaulicht eine Ausführungsform, bei der der Sägerahmen 5 nach Art eines Klappmessers an dem Zwischenträger 4 befestigt ist. Der Zwischenträger 4 zeigt bei dem Ausführungsbeispiel nach Figur 5 eine L-förmige Gestalt auf, bestehend aus einem Querbalken 45 und einem vertikal nach unten führenden Schenkel 46. An dem unteren freien Ende des Schenkels 46 ist über ein schematisch angedeutetes Schwenklager 47 der Sägerahmen 5 an dem Zwischenträger 4 anscharniert. Die Lage der Schwenkachse 47, die horizontal verläuft, ist so gewählt, dass in der Endlage das Sägeband 34 etwa horizontal verläuft, d.h. denselben Verlauf zeigt, wie das Sägeband 34 bei dem Ausführungsbeispiel nach Figur 1, wenn das Werkstück 16 vollständig durchtrennt ist.

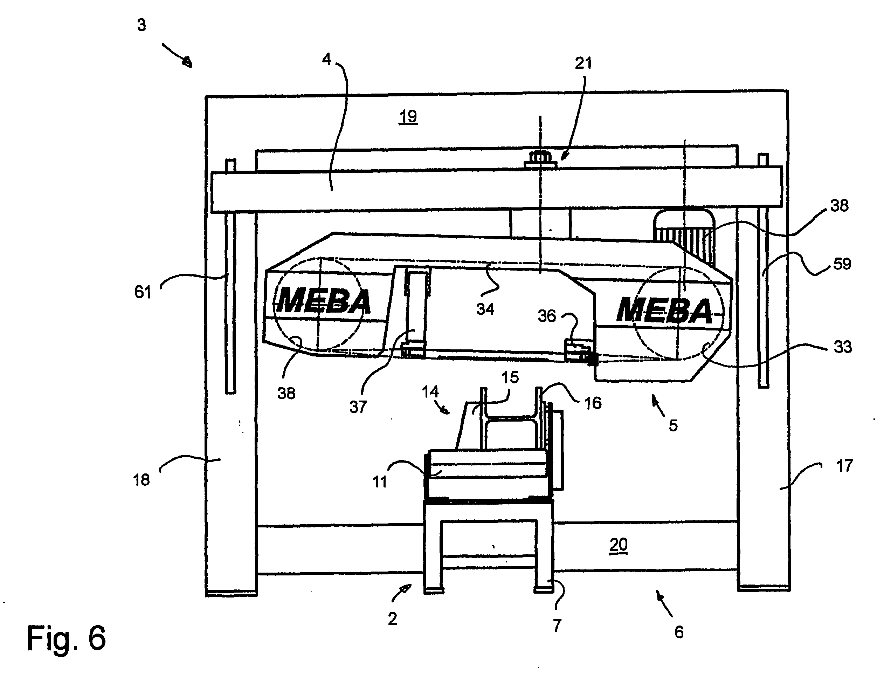

Fig. 6 zeigt ein weiteres Ausführungsbeispiel der erfindungsgemäßen Metallbandsäge, wobei die Ausführungsform dem Ausführungsbeispiel nach Fig. 1 ähnelt. Für einander entsprechende Teile werden dieselben Bezugszeichen verwendet, wie bei den vorigen Figuren, ohne dass eine ausführliche Erläuterung gegeben ist. Die Erklärung zu Fig. 6 beschränkt sich damit im Wesentlichen auf die Unterschiede.

Der prinzipielle Unterschied zu der Ausführungsform nach Figur 1 besteht darin, dass das Schwenklager 21 nicht wie zuvor den Hauptträger mit dem Hilfsträger verbindet, sondern, wie die Figur erkennen lässt, zwischen dem Hilfsträger 4 und dem Sägerahmen 5 angeordnet ist. Der Hilfsträger 4 ist bei dem Ausführungsbeispiel nach Figur 6 ein einfacher quer verlaufender Balken, der sich parallel zu dem Querjoch 19 erstreckt. An den beiden Pfeilern 17 und 18 sind vertikal verlaufende Führungsschienen 59 und 61 vorgesehen, auf denen in dem Hilfsträger 4 enthaltene Führungsschlitten laufen, die in der Zeichnung nicht erkennbar sind. Auf diese Weise ist der Hilfsträger 4 vertikal verfahrbar. Der Antriebsmotor zur Vertikalbewegung des Hilfsträgers 4 wird durch den Pfeiler 17 verdeckt und ist deswegen in der Darstellung nicht zu sehen.

Die Drehachse des Schwenklagers 21 verläuft wiederum in einer Ebene, die durch den ortsfesten Backen 13 festgelegt ist. Die Achse ist senkrecht und damit parallel zu der Zustellbewegung längs den Führungsschienen 59 und 61.

Ebenso wie bei dem Ausführungsbeispiel nach Figur 1 ist das Schwenklager 21 oberhalb des Werkstücks angeordnet und befindet sich damit in einem gut geschützten Bereich. Der Raum unter dem Sägetisch ist frei und es besteht keine Notwendigkeit den Sägetisch mit Rücksicht auf ein entsprechendes kräftiges Schwenklager, das auch in der Lage ist das Werkstück zu tragen, auf eine unpraktische vergrößerte Höhe anzuheben.

Es ist ohne weiteres verständlich, dass die Anordnung, wie sie in Fig. 6 gezeigt ist, grundsätzlich auch auf einer Ausführung nach Fig. 3 übertragbar ist, bei der der Hauptträger nicht portal-, sondern galgenförmig ausgeführt ist. Hier kann an dem Pfeiler 17 der Hilfsträger 4 vertikal verfahrbar sein. An dem Hilfsträger 4 würde das Schwenklager 21 sitzen, über das der Hilfsträger 4 mit dem Sägerahmen 5 verbunden wäre.

Eine Metallbandsäge weist einen Hauptträger auf, an dem ein Zwischenträger schwenkbar befestigt ist. An dem Zwischenträger sitzt mittels eines Schwenklagers oder einer Parallelführung der Sägerahmen, der auf das Werkstück zustellbar ist. Das Schwenklager, das den Hauptträger und den Zwischenträger miteinander verbindet, befindet sich oberhalb des zu bearbeitenden Werkstücks.

## Patentansprüche

1. Horizontale Metallbandsäge (1) zum Gehrungsschneiden von länglichen Werkstücken,
mit einem Maschinengestell (2), das eine Auflageeinrichtung (11,12) für zu bearbeitende Werkstücke (16) aufweist, wobei die Auflageeinrichtung (11,12) einen Spannstock (14) umfasst, der einen feststehenden und einen zustellbaren Backen (13,15) aufweist,
mit einem Hauptträger (3),
mit einem Drehlager (21), das und eine vertikale Drehachse (25) definiert, die durch die Auflageeinrichtung (11,12) führt und die in einer Ebene liegt, in der auch die Werkstückanlagefläche eines feststehenden Spannbackens (13) liegt,
mit einem Zwischenträger (4), der über das Drehlager (21) mit dem Hauptträger (3) verbunden ist und mittels des Drehlagers (21) um die vertikale Achse (25) schwenkbar ist,
mit einem Sägerahmen (5), in dem ein Sägeband (34) geführt läuft und der an dem Zwischenträger (4) beweglich derart gelagert ist, dass er in einer zu der Drehachse (25) parallelen Ebene verschiebbar oder schwenkbar ist
**dadurch gekennzeichnet, dass** das Drucklager an dem Hauptträger (3) oberhalb der Auflageeinrichtung (11,12) und oberhalb des zu bearbeiten Werkstückes, angeordnet ist.

2. Horizontale Metallbandsäge (1) zum Gehrungsschneiden von länglichen Werkstücken,
mit einem Maschinengestell (2), das eine Auflageeinrichtung (11,12) für zu bearbeitende Werkstücke (16) aufweist, wobei
die Auflageeinrichtung (11,12) einen Spannstock (14) umfasst, der einen feststehenden und einen zustellbaren Backen (13,15) aufweist,
mit einem Hauptträger (3),
mit einem Zwischenträger (4), der an dem Hauptträger (3) beweglich derart gelagert ist, dass er in Richtung auf die Auflageeinrichtung (11,12) vertikal verschiebbar ist,
mit einem Drehlager (21), das eine verikale Drehachse (25) definiert, die durch die Auflageeinrichtung (11,12) führt und die in einer Ebene liegt, in der auch die Werkstückanlagefläche eines feststehenden Spannbackens (13) liegt, und
mit einem Sägerahmen (5), in dem ein Sägeband (34) geführt läuft und der über das Drehlager (21) mit dem Zwischenträger (4) verbunden ist und mittels des Drehlagers (21) um die vertikale Achse (25) schwenkbar ist
**dadurch gekennzeichnet, dass** des Ducklager an dem Zwischenträger (4) oberhalb der Auflageeinrichtung (11,12) und oberhalb aus zu bearbeitenden Werkstücks angeordnet ist.

3. Metallbandsäge nach den Ansprüchen 1 oder 2, **dadurch gekennzeichnet, dass** sich der Hauptträger (3) seitlich der Auflageeinrichtung (11,12) befindet.

4. Metallbandsäge nach den Ansprüchen 1 oder 2, **dadurch gekennzeichnet, dass** das Maschinengestell (2) portalförmig ist und wenigstens zwei seitliche Pfeiler (17,18) sowie ein die Pfeiler (17,18) miteinander verbindendes Joch (19) aufweist, an dem das Drehlager (21) befestigt ist.

5. Metallbandsäge nach Anspruch 4, **dadurch gekennzeichnet, dass** die beiden Pfeiler (17,18) einen Abstand voneinander aufweisen, dass zwischen ihnen der Sägerahmen (5) hindurchpasst.

6. Metallbandsäge nach den Ansprüchen 1 oder 2, **dadurch gekennzeichnet, dass** der Hauptträger (3) eine galgenförmige Gestalt aufweist, mit einem seitlichen neben der Auflageeinrichtung (11,12) befindlichen Pfeiler (17) und einem daran befestigten Kragbalken (41) an dem das Drehlager (21) angeordnet ist.

7. Metallbandsäge nach Anspruch 6, **dadurch gekennzeichnet, dass** der Pfeiler (17) in Richtung parallel zu der Längserstreckung des Maschinengestells (2) gegenüber der vertikalen Schwenkachse (25) versetzt ist, derart, dass der Zwischenträger (4) in entgegengesetzte Gehrungsstellungen zu bringen ist.

8. Metallbandsäge nach den Ansprüchen 4 oder 6, **dadurch gekennzeichnet, dass** der oder die Pfeiler (17,18) mit dem Maschinengestell (2) verbunden sind.

9. Metallbandsäge nach den Ansprüchen 1 oder 2, **dadurch gekennzeichnet, dass** der Zwischenträger (4) eine L-förmige Gestalt aufweist, von dem ein Schenkel (45) mit dem Drehlager (21) verbunden ist, und dass der andere Schenkel (46) mit dem Sägerahmen (5) verbunden ist, wobei der Sägerahmen (5) gegenüber diesem Schenkel (46) beweglich ist.

10. Metallbandsäge nach Anspruch 1, **dadurch gekennzeichnet, dass** der Zwischenträger (4) ein horizontales Schwenklager (47) aufweist, das den Sägerahmen (5) mit dem Zwischenträger (4) verbindet, derart, dass der Sägerahmen (4) um eine horizontale Achse schwenkbar ist.

11. Metallbandsäge nach den Ansprüchen 1 oder 2, **dadurch gekennzeichnet, dass** der Zwischenträger (4) zwei über ein Joch (26) miteinander verbundene vertikale Schenkel (27,28) aufweist, und dass der Sägerahmen (5) an dem Zwischenträger (4) höhenverstellbar parallel geführt ist.

12. Metallbandsäge nach Anspruch 11, **dadurch gekennzeichnet, dass** an jedem der beiden Schenkel (27,28) eine Linearführung (31) vorgesehen ist, über die der Sägerahmen (5) mit dem Zwischenträger (4) verbunden ist, derart, dass der Sägerahmen längs einer linearen Achse auf das Werkstück (16) zu zustellbar ist.

13. Metallbandsäge nach den Ansprüchen 1 oder 2, **dadurch gekennzeichnet, dass** die Auflageeinrichtung (11,12) Rollen (11) umfasst, deren Außenumfangsfläche eine Ebene berührt, in der eine Tischfläche (12) liegt.

14. Metallbandsäge nach den Ansprüchen 1 oder 2, **dadurch gekennzeichnet, dass** der feststehende Backen (13) eine Anlagefläche definiert, die eine Anlageebene festlegt, in der die Vertikale Schwenkachse (21) liegt.

15. Metallbandsäge nach den Ansprüchen 1 oder 2, **dadurch gekennzeichnet, dass** Antriebseinrichtungen (24,38) vorgesehen sind, die dem Schwenklager zugeordnet ist.

16. Metallbandsäge nach den Ansprüchen 1 oder 2, **dadurch gekennzeichnet, dass** der Sägerahmen (5) zwei achsparallel zueinander gelagerte Umlenkscheiben (33) aufweist, um die das Sägeband (34) umläuft, und dass das das Sägeband (34) in einem Bereich zwischen den Umlenkrollen (33) gegenüber einer Ebene, die zu den Achsen der Umlenkscheiben (33) parallel ist, gedreht verläuft.

## Claims

1. Horizontal metal-cutting band saw (1) mitring elongated workpieces, with a machine frame (2), which has a supporting device (11, 12) for the workpieces (16) to be machined, wherein the supporting device (11, 12) comprises a vice (14), which has a fixed and an adjustable jaw (13, 15),
with a main beam (3),
with a pivot bearing (21), which defines a vertical rotational axis (25), which runs through the supporting device (11, 12) and lies in a plane, in which the workpiece contact face of a fixed clamping jaw (13) lies,
with an intermediate member (4), which is connected to the main beam (3) by means of the pivot bearing (21) and can be pivoted around the vertical axis (25) by means of the pivot bearing (21),
with a saw frame (5), in which a band saw blade (34) runs in a guided manner and which is movably disposed on the intermediate member (4) such that it is displaceable or can be pivoted in a plane parallel to the rotational axis (25),
**characterised in that** the pivot bearing is arranged on the main beam (3) above the supporting device (11, 12) and above the workpiece to be machined.

2. Horizontal metal-cutting band saw (1) for mitring elongated workpieces, with a machine frame (2), which has a supporting device (11, 12) for the workpieces (16) to be machined, wherein the supporting device (11, 12) comprises a vice (14), which has a fixed and an adjustable jaw (13, 15),
with a main beam (3),
with an intermediate member (4), which is movably disposed on the main beam (3) such that it is vertically displaceable towards the supporting device (11, 12),
with a pivot bearing (21), which defines a vertical rotational axis (25), which runs through the supporting device (11,12) and lies in a plane, in which the workpiece contact face of a fixed clamping jaw (13) lies,
with a saw frame (5), in which a band saw blade (34) runs in a guided manner and which is connected to the intermediate member (4) by means of the pivot bearing (21) and can be pivoted around the vertical axis (25) by means of the pivot bearing (21),
**characterised in that** the pivot bearing is arranged on the intermediate member (4) above the supporting device (11, 12) and above the workpiece to be machined.

3. Metal-cutting band saw according to Claims 1 or 2, **characterised in that** the main beam (3) is located to the side of the supporting device (11, 12).

4. Metal-cutting band saw according to Claims 1 or 2, **characterised in that** the machine frame (2) is in the shape of a gantry and has at least two lateral pillars (17, 18) and also a crossbeam (19), which connects the pillars together and to which the pivot bearing (21) is fastened.

5. Metal-cutting band saw according to Claim 4, **characterised in that** the two pillars (17, 18) are spaced from one another so that the saw frame (5) passes between them.

6. Metal-cutting band saw according to Claims 1 or 2, **characterised in that** the main beam (3) has a gallows-like structure having a lateral pillar (17) located next to the supporting device (11, 12) and a cantilever beam (41), which is fastened to said pillar and on which the pivot bearing (21) is arranged.

7. Metal-cutting band saw according to Claim 6, **characterised in that** the pillar (17) is offset relative to the vertical pivot axis (25) in parallel direction to the longitudinal extent of the machine frame (2) in such a way that the intermediate member (4) can be brought into opposed mitring positions.

8. Metal-cutting band saw according to Claims 4 or 6, **characterised in that** the pillar or pillars (17, 18) are connected to the machine frame (2).

9. Metal-cutting band saw according to Claims 1 or 2, **characterised in that** the intermediate member (4) has an L-shaped structure, of which one leg (45) is connected to the pivot bearing (21), and that the other leg (46) is connected to the saw frame (5), wherein the saw frame (5) is movable relative to this leg (46).

10. Metal-cutting band saw according to Claim 1, **characterised in that** the intermediate member (4) has a horizontal swivel bearing (47), which connects the saw frame (5) to the intermediate member (4) in such a way that the saw frame (4) can be swivelled around a horizontal axis.

11. Metal-cutting band saw according to Claims 1 or 2, **characterised in that** the intermediate member (4) has two vertical legs (27, 28) connected to one another by means of a crossbeam (26), and that the saw frame (5) is height-adjustable and guided parallel on the intermediate member (4).

12. Metal-cutting band saw according to Claim 11, **characterised in that** a linear guide (31) is provided on each of the two legs (27,28), said saw frame (5) being connected to the intermediate member (4) by means of said linear guide in such a way that the saw frame can be moved towards the workpiece (16) along a linear axis.

13. Metal-cutting band saw according to Claims 1 or 2, **characterised in that** the supporting device (11, 12) comprises rolls (11), the outer peripheral face of which touches a plane, in which a bench surface (12) lies.

14. Metal-cutting band saw according to Claims 1 or 2, **characterised in that** the fixed jaw (13) defines an abutment surface, which defines an abutment plane, in which the vertical pivot axis (21) lies.

15. Metal-cutting band saw according to Claims 1 or 2, **characterised in that** drive means (24, 38) associated with the swivel bearing are provided.

16. Metal-cutting band saw according to Claims 1 or 2, **characterised in that** the saw frame (5) bas two return pulleys (33) mounted axis-parallel to one another, around which the band saw blade (34) rotates, and that in a region between the return pulleys (33) the band saw blade (34) runs rotated relative to a plane, which is parallel to the axes of the return pulleys (33).

## Revendications

1. Scie à ruban horizontale à métaux (1) pour la coupe à onglet de pièces allongées, avec un bâti de machine (2) comportant un dispositif d'appui (11, 12) pour des pièces à travailler (16), le dispositif d'appui (11, 12) comprenant un étau de serrage (14) composé de mâchoires fixe et mobile (13, 15), avec un support principal (3), avec un pivot (21) qui définit un axe de pivotement vertical (25), lequel passe par le dispositif d'appui (11, 12) et se trouve dans un plan dans lequel passe aussi la surface d'application de pièce d'une mâchoire de serrage fixe (13), avec un support intermédiaire (4) qui est relié au support principal (3) par l'intermédiaire du pivot (21) et qui peut pivoter autour de l'axe vertical (25) au moyen du pivot (21), avec un cadre de scie (5) dans lequel un ruban de scie (34) défile en étant guidé et qui est monté mobile sur le support intermédiaire (4), de façon à pouvoir coulisser ou pivoter dans un plan parallèle à l'axe de rotation (25), **caractérisée en ce que** le pivot est disposé sur le support principal (3) au-dessus du dispositif d'appui (11, 12) et au-dessus de la pièce à travailler.

2. Scie à ruban horizontale à métaux (1) pour la coupe à onglet de pièces allongées, avec un bâti de machine (2) comportant un dispositif d'appui (11, 12) pour des pièces à travailler (16), le dispositif d'appui (11, 12) comprenant un étau de serrage (14) composé de mâchoires fixe et mobile (13, 15), avec un support principal (3), avec un support intermédiaire (4) qui est monté mobile sur le support principal (3), de façon à pouvoir coulisser verticalement en direction du dispositif d'appui (11, 12), avec un pivot (21) qui définit un axe de pivotement vertical (25), lequel passe par le dispositif d'appui (11, 12) et se trouve dans un plan dans lequel passe aussi la surface d'application de pièce d'une mâchoire de serrage fixe (13), et avec un cadre de scie (5) dans lequel un ruban de scie (34) défile en étant guidé et qui est relié au support intermédiaire (4) par l'intermédiaire du pivot (21) et peut pivoter autour de l'axe vertical (25) au moyen du pivot (21), **caractérisée en ce que** le pivot est disposé sur le support intermédiaire (4) au-dessus du dispositif d'appui (11, 12) et au-dessus de la pièce à travailler.

3. Scie à ruban à métaux selon les revendications 1 ou 2, **caractérisée en ce que** le support principal (3) est disposé latéralement par rapport au dispositif d'appui (11, 12) .

4. Scie à ruban à métaux selon les revendications 1 ou 2, **caractérisée en ce que** le bâti de machine (2) est en forme de portique et comporte au moins deux montants latéraux (17, 18) et une traverse (19) qui relie les montants (17, 18) entre eux et à laquelle est fixé le pivot (21).

5. Scie à ruban à métaux selon la revendication 4, **caractérisée en ce que** les deux montants (17, 18) présentent l'un par rapport à l'autre une distance permettant au cadre de scie (5) de passer entre eux.

6. Scie à ruban à métaux selon les revendications 1 ou 2, **caractérisée en ce que** le support principal (3) présente une forme de potence, avec un montant (17) situé latéralement à côté du dispositif d'appui (11, 12) et avec un bras en porte-à-faux (41) qui y est fixé et sur lequel est disposé le pivot (21).

7. Scie à ruban à métaux selon la revendication 6, **caractérisée en ce que** le montant (17) est décalé par rapport à l'axe de pivotement vertical (25) dans une direction parallèle à l'extension longitudinale du bâti de machine (2), de façon à pouvoir amener le support intermédiaire (4) dans des positions de coupe à onglet opposées.

8. Scie à ruban à métaux selon les revendications 4 ou 6, **caractérisée en ce que** le ou les montants (17, 18) sont reliés au bâti de machine (2).

9. Scie à ruban à métaux selon les revendications 1 ou 2, **caractérisée en ce que** le support intermédiaire (4) présente la forme d'un L dont une branche (45) est reliée au pivot (21), et **en ce que** l'autre branche (46) est reliée au cadre de scie (5), le cadre de scie (5) étant mobile par rapport à cette branche (46).

10. Scie à ruban à métaux selon la revendication 1, **caractérisée en ce que** le support intermédiaire (4) comporte un palier pivotant horizontal (47) qui relie le cadre de scie (5) au support intermédiaire (4), de façon que le cadre de scie (4) puisse pivoter autour d'un axe horizontal.

11. Scie à ruban à métaux selon les revendications 1 ou 2, **caractérisée en ce que** le support intermédiaire (4) comporte deux branches verticales (27, 28) reliées entre elles par l'intermédiaire d'une traverse (26), et **en ce que** le cadre de scie (5) est guidé parallèlement et avec une hauteur réglable sur le support intermédiaire (4).

12. Scie à ruban à métaux selon la revendication 11, **caractérisée en ce que** sur chacune des deux branches (27, 28) est prévu un guidage linéaire (31) par l'intermédiaire duquel le cadre de scie (5) est relié au support intermédiaire (4), de façon que le cadre de scie puisse être approché de la pièce (16) suivant un axe linéaire.

13. Scie à ruban à métaux selon les revendications 1 ou 2, **caractérisée en ce que** le dispositif d'appui (11, 12) comprend des rouleaux (11) dont la surface périphérique extérieure touche un plan dans lequel se trouve une surface de table (12).

14. Scie à ruban à métaux selon les revendications 1 ou 2, **caractérisée en ce que** la mâchoire fixe (13) définit une surface d'appui, laquelle détermine un plan d'appui dans lequel se trouve l'axe de pivotement vertical (21).

15. Scie à ruban à métaux selon les revendications 1 ou 2, **caractérisée en ce que** des dispositifs d'entraînement (24, 38) associés au palier pivotant sont prévus.

16. Scie à ruban à métaux selon les revendications 1 ou 2, **caractérisée en ce que** le cadre de scie (5) comprend deux poulies de renvoi (33) dont les axes sont parallèles entre eux et autour desquelles passe le ruban de scie (34), et **en ce que**, dans une zone située entre les poulies de renvoi (33), le ruban de scie (34) passe en étant tourné par rapport à un plan parallèle aux axes des poulies de renvoi (33).
